# EUROPEAN PATENT SPECIFICATION

(11) **EP 3 409 509 B1**
(45) Date of publication and mention of the grant of the patent: **13.05.2020**
(21) Application number: 17744249.8
(22) Date of filing: 25.01.2017
(51) Int. Cl.: B60C 13/00, B60C 11/13, B29D 30/72

(54) **TIRE**
REIFEN
PNEUMATIQUE

(30) Priority: 25.01.2016 JP 2016011941
(43) Date of publication of application: 05.12.2018
(73) Proprietor: Bridgestone Corporation, Tokyo 104-8340 (JP)
(72) Inventor: IWABUCHI, Sotaro, Tokyo 104-8340 (JP)
(74) Representative: Oxley, Robin John George
(86) International application number: PCT/JP2017/002512
(87) International publication number: WO 2017/131019

(56) References cited:
- WO-A1-2013/182412
- WO-A1-2013/182412
- JP-A- H11 291 722
- JP-A- H11 291 722
- JP-A- 2001 191 745
- JP-A- 2014 162 447
- JP-A- 2015 529 170
- US-B2- 8 695 664

## Description

### Technical Field

The present invention relates to a tire on which marks such as characters are formed.

### Background Art

Conventionally, there is a known a technique of forming fine protrusions on a side portion of a tire to form patterns having a contrast. For example, International Publication No. 2012/131089 discloses the patterns configured to control reflection of light and obtain a contrast with a periphery by forming a plurality of fibrous materials distributed over the entire region of the patterns. Reference is also made to JP 2001-191745, JP H11-291722 and WO 2013/182412.

### SUMMARY OF INVENTION

### Technical Problem

However, in the case of the patterns with such a contrast, it is not possible for the patterns to be made blacker than a black color of the tire, and it is thus required to improve visibility.

An object of the invention is to provide a tire in which a dark portion controls a reflection of light incident in the respective directions, such that a contrast of a display portion can be increased, and the dark portion shines in a stripe shape even if the light is reflected, thereby improving visibility.

### Solution to Problem

A tire according to a first aspect of the invention includes a plurality of protrusion portions protrudedly disposed on an outer surface of the tire and configured by ridges having a plurality of straight line portions extending in a direction intersecting each other, in which a height dimension of the protrusion portion is set to be from 0.2 mm to 0.5 mm, and a pitch of the ridges which configure the protrusion portions adjacent to each other when being viewed in a plan view is set to be from 0.15 mm to 0.40 mm, characterized in that wall surfaces of the ridges which configure the protrusion portion are inclined, and an angle formed by wall surfaces facing each other in the ridges of the adjacent protrusion portions is set to be from 15° to 40°.

In the tire according to a second aspect of the disclosure, in the first implementation, the ridges have bent portions in which end portion of the plurality of straight line portions are connected to each other, and the bent portion in one of the protrusion portions adjacent to each other when being viewed in a plan view is positioned at a tip end side of the bent portion in the other protrusion portion to form a dark portion for configuring a mark.

That is, the mark is formed on an outer surface of the tire by the dark portion configured by the plurality of protrusion portions. Here, the outer surface of the tire refers to a surface visible from the outside of the tire, such as a tire side portion, a tread portion, a groove bottom of a tread, or a groove wall. In addition, the tire includes both of a pneumatic tire and a non-pneumatic tire.

The dark portion which configures the mark is composed of the ridges having a height dimension from 0.2 mm to 0.5 mm, and has the bent portion in which the ridges are bent when being viewed in a plan view. Such a bent portion has a wall of one side and a wall of the other side bounded by a bent portion, and wall surfaces of the walls constituting the bent portion are directed toward four directions.

Therefore, when light is reflected from the respective wall surfaces, a reflection direction of the light can be made different, thereby suppressing a concentration of reflected light. As a result, since it is possible to make the dark portion configured by the protrusion portions having the bent portions look dark, the dark portion may be made to look darker than a black color of the tire. In addition, since the dark portion looks black from various angles, anisotropy is improved and visibility is improved.

In addition, since the dark portion configured by the protrusion portions having the bent portions can be made to look dark, a contrast between the dark portion and portions other than the dark portion can be increased and visibility can be thus improved.

In addition, the respective protrusion portions are disposed so that the bent portion of one of the adjacent protrusion portions when being viewed in a plan view is positioned on the tip end side of the bent portion of the other protrusion portion, and a pitch of the ridges which configure both of the protrusion portions is configured to be from 0.15 mm to 0.40 mm. Therefore, it is possible to densely dispose the respective protrusion portions as compared to a case in which the protrusion portion having the bent portion is separately disposed. As a result, it is possible for the dark portion which configures the mark to be made to look darker.

In the tire according to the third aspect of the disclosure, in the second implementation, bent portions are continuously disposed in parallel and the protrusion portion is formed in a zigzag shape.

As a result, since the protrusion portions which configure the dark portion may be more densely disposed, it is possible for the dark portion to be made to look darker and visibility is thus improved.

In the tire according to the fourth aspect of the disclosure, in any one of the first to third implementations, an angle between the plurality of straight line portions is set to be from 5° to 170°.

Since the angle between the plurality of straight line portions is set to be from 5° to 170°, a concentration of reflected light between the ridges in the bent portion is suppressed and anisotropy is increased, thereby improving visibility.

In the tire according to the present invention, wall surfaces of the ridges which configure the protrusion portion are inclined, and an angle formed by wall surfaces facing each other in ridges of an adjacent protrusion portions is set to be from 15° to 40°.

When the angle formed by the wall surfaces of the ridges in the adjacent protrusion portions is greater than 40°, a ratio in which the reflected light on the wall surfaces is returned to the outside from a space between the ridges is increased, resulting in less improvement of visibility. That is, the light is reflected and a contrast difference with a bright portion is decreased, resulting in less improvement of visibility. Meanwhile, when the angle formed by the wall surfaces of the ridges in the adjacent protrusion portions is less than 15°, it is easy for the ridges to collapse.

### Advantageous Effects of Invention

According to the disclosure, the dark portion controls the reflection of light incident in the respective directions, such that the contrast of the display portion can be increased, and the dark portion shines in a stripe shape even if the light is reflected, thereby improving visibility.

### BRIEF DESCRIPTION OF DRAWINGS

Fig. 1 is a side view of a tire according to the present embodiment.
Fig. 2 is a partial perspective cross-sectional view of a tread of the tire according to the present embodiment.
Fig. 3 is a plan view showing a portion of a dark portion of the tire according to the present embodiment.
Fig. 4 is an enlarged plan view showing a portion of a protrusion portion which configures the dark portion according to the present embodiment.
Fig. 5 is a cross-sectional view corresponding to line A-A of Fig. 4.
Fig. 6 is an enlarged plan view of a portion of a mark portion of the tire according to the present embodiment.
Fig. 7 is a view showing Tables 1 to 4, which are results of test examples.
Fig. 8 is a plan view showing an example of a configuration in which a first straight line portion and a second straight line portion of the protrusion portion are not connected to each other in the tire according to the present embodiment.

### DESCRIPTION OF EMBODIMENTS

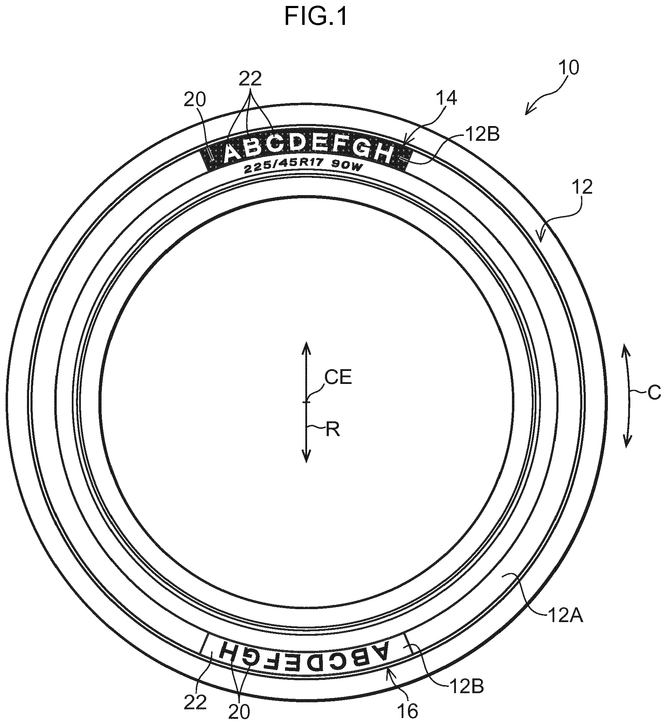

Hereinafter, an embodiment of the disclosure will be described with reference to the accompanying drawings. In Fig. 1, a side view of a tire 10 according to the present embodiment is shown. In the present embodiment, C refers to a circumferential direction of the tire, and R refers to a radial direction of the tire. In addition, the tire 10 may be a pneumatic tire or may be a non-pneumatic tire.

A first mark portion 14 and a second mark portion 16 that form a mark are formed on a tire side portion 12 (decorative portion) which configures an outer surface of the tire. The respective mark portions 14 and 16 have a belt-like arc shape, and are formed symmetrically with respect to a center axis CE of the tire. It is preferable that the mark portions 14 and 16 be disposed outside a maximum width portion (that is, a portion in which a linear distance between the tire side portions 12 is the maximum) of the tire, in the radial direction R of the tire. In addition, the respective mark portions 14 and 16 have dark portions 20 looking black in appearance and bright portions 22 looking brighter than the dark portions 20, respectively.

In the first mark portion 14 provided on an upper side of the page space of Fig. 1, the bright portion 22 is configured by characters such as "ABCDEFGH" formed of a smooth surface, and the dark portion 20 is formed at an outer circumferential portion of the bright portion 22. The dark portion 20 is a kind of decorative band, and is formed so as to surround the characters formed by the bright portion 22.

Meanwhile, in the second mark portion 16 provided on a lower side of the page space of Fig. 1, characters such as "ABCDEFGH" are formed of the dark portion 20, and an outer circumferential portion of the dark portion 20 is configured by the bright portion 22. In the second mark portion 16, the bright portion 22 configures a kind of decorative band, and is provided so as to surround the characters formed by the dark portion 20. The bright portion 22 is configured by a smooth surface in the same way as a general surface 12A which configures an outer surface of the tire side portion 12 other than the mark portions, and the bright portion 22 is configured by a step surface 12B recessed inward from the general surface 12A.

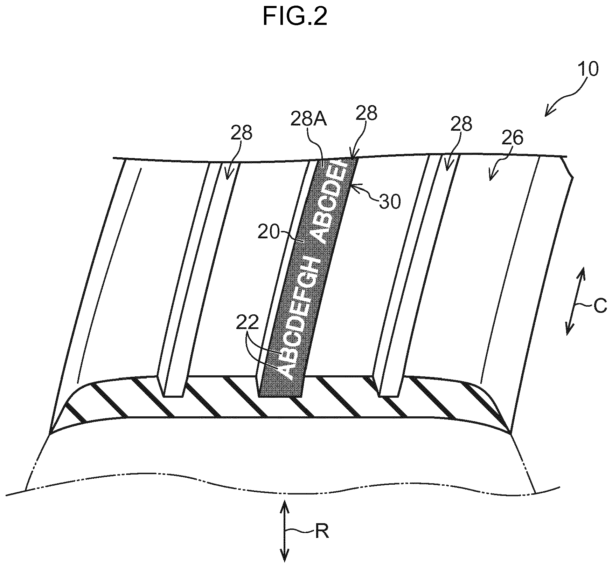

In addition, the tire 10 includes a tread 26 at an outer side in the radial direction R of the tire, as shown in Fig. 2. In the tread 26, a plurality of circumferential grooves 28 is formed. A third mark portion 30 forming a mark is formed on a groove bottom 28A (decorative portion) of the circumferential grooves 28 which configure the outer surface of the tire outer. The third mark portion 30 has a band shape, and is formed on a part of the circumferential groove 28. The third mark portion 30 also has a dark portion 20 looking black in appearance and a bright portion 22 looking brighter than the dark portions 20.

In the third mark portion 30, the bright portion 22 is configured by characters such as "ABCDEFGH" formed of a smooth surface, and the dark portion 20 is formed at an outer circumferential portion of the bright portion 22. The dark portion 20 is a kind of decorative band, and is formed so as to surround the characters formed by the bright portion 22.

In addition, the respective mark portions 14, 16, and 30 including the dark portions 20 can be formed by providing corresponding protrusions and recesses in a mold of the tire 10 by laser processing.

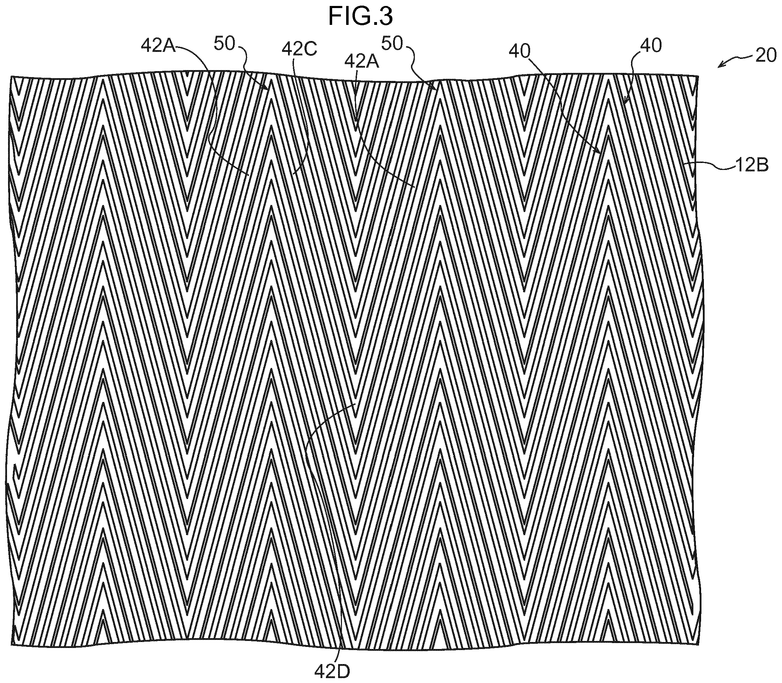

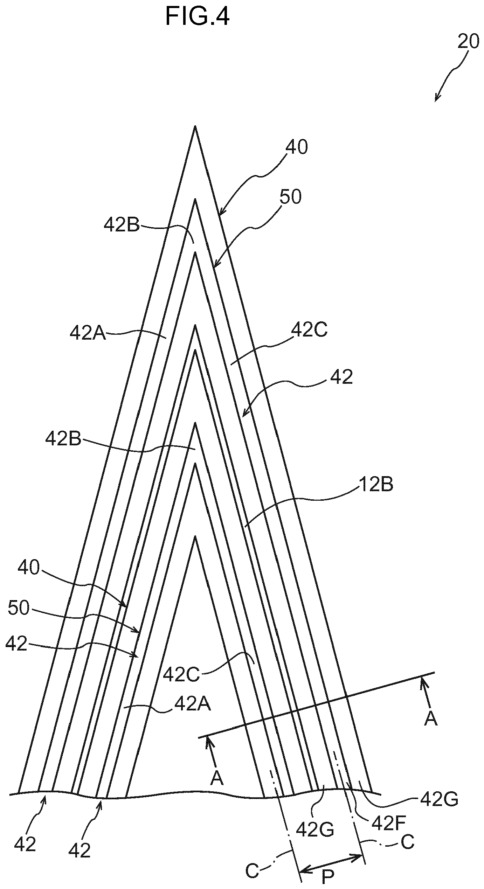

The dark portion 20 of the first mark portion 14 is configured by a plurality of protrusion portions 40 protrudedly disposed on the step surface 12B recessed inward from the general surface 12A (see Fig. 1) of the tire side portion 12, as shown in Figs. 3 and 4. Hereinafter, the dark portion 20 of the first mark portion 14 will be described as an example, but the dark portions 20 of other mark portions 16 and 30 have the same structure.

The protrusion portion 40 is configured by ridges 42 formed on the step surface 12B, as shown in Fig. 4. The ridges 42 are bent and bent portions 50 are formed on the protrusion portion 40.

That is, the ridge 42 is configured by a first straight line portion 42A extending in a straight line shape, a first refraction portion 42B continuously provided to an end portion of the first straight line portion 42A, and a second straight line portion 42C continuously provided to the first refraction portion 42B and extending in the straight line shape. The first refraction portion 42B is configured so that the first straight line portion 42A and the second straight line portion 42C extend in a diagonal line direction through the first refraction portion 42B. Thereby, a shape of the bent portion 50 in the protrusion portion 40 when being viewed in a plan view is a bent shape having the first refraction portion 42B as a top portion, or a V-shaped shape. Here, the shape when being viewed in a plan view is a shape viewed in a standing direction of the protrusion portion 40.

As shown in Fig. 3, the bent portion 50 is disposed in parallel to each other. The first straight line portion 42A in an adjacent one bent portion 50A is connected to the second straight line portion 42C in the other bent portion 50B, and a second refraction portion 42D is formed at the connection portion. Protrusions and recesses are alternately formed in the protrusion portion 40 by the plurality of bent portions 50 which are continuously provided, when being viewed in a plan view, and the corresponding protrusion portion 40 has a zigzag shape.

As shown in Fig. 4, in the first refraction portion 42B, an angle θ2 at which the first straight line portion 42A and the second straight line portion 42C intersect each other is set to be from 5° to 170°. The same is also applied to the second refraction portion 42D. In a case in which the intersection angle θ2 is 5° or less, a space between the ridges 42 (between the first straight line portion 42A and the second straight line portion 42C) in the bent portion 50 is not secured, and it is difficult for the tire to look black and visibility is thus decreased. In addition, in a case in which the intersection angle θ2 is 170° or more, since the ridges 42 (the first straight line portion 42A and the second straight line portion 42C) are close to each other in parallel, a concentration of the reflected light is not sufficiently suppressed, and in addition, since anisotropy is lowered, visibility is decreased.

In addition, in the present embodiment, in the first refraction portion 42B and the second refraction portion 42D, the angle θ2 at which the first straight line portion 42A and the second straight line portion 42C intersect each other is set to be from 5° to 170°, but it is preferable that the angle θ2 be set to from 30° to 90°. As long as the angle θ2 is in this range, the concentration of the reflected light is effectively suppressed and the tire looks darker. In addition, since anisotropy is improved, visibility is increased.

The respective protrusion portions 40 formed as described above are disposed so that the bent portion 50 in one of the adjacent protrusion portions 40 is disposed at a tip end side of the bent portion 50 in the other protrusion portion 40 when being viewed in a plan view as shown in Fig. 4. As a result, the adjacent protrusion portions 40 are disposed to close to each other so that a first refraction portion 42B forming a top portion in the bent portion 50 of one protrusion portion 40 is disposed inside the bent portion 50 of the other protrusion portion 40.

A pitch P between the ridges 42 which configure the adjacent protrusion portions 40 is set to be from 0.20 mm to 0.3 mm. The pitch P is represented by a distance between the straight line portions 42C of the ridges 42 which configure the adjacent protrusion portions 40. For example, the pitch P can be represented by a separation distance between a center line C of the ridge 42 which configures the second straight line portion 42C of one protrusion portion 40 and a center line C of the ridge 42 which configures the second straight line portion 42C of the other protrusion portion 40. The center line C is provided to a center of the ridge 42 in a width direction of the ridge 42 and is a virtual line extending in a length direction of the ridge 42.

In addition, a case in which the pitch P between the ridges 42 which configure the adjacent protrusion portions 40 is set to be from 0.2 mm to 0.3 mm is described in the present embodiment, but the embodiment of the disclosure is not limited thereto. For example, the pitch P can be in a range from 0.15 mm to 0.40 mm, and it is possible to obtain a predetermined effect as long as the pitch P is in this range.

That is, the dark portion 20 is configured to look dark by darkening the side portions of the protrusion portion 40, specifically, the spaces between the ridges 42 in one of the adjacent protrusion portions 40 and the ridges 42 in the other protrusion portion 40. However, when the pitch P between the adjacent ridges 42 exceeds 0.40 mm, since the spaces between the ridges 42 are expanded, a ratio in which the reflected light on the wall surfaces is returned to the outside from a space between the ridges, as a result, an effect in which the dark portion 20 looks black starts to be decreased, and when the pitch P is less than 0.15 mm, it is difficult to ensure moldability in a manufacturing process.

For this reason, it is preferable that the pitch P between the ridges 42 which configure the adjacent protrusion portions 40 be set to from 0.15 mm to 0.40 mm, and it is more preferable that the pitch P be set to from 0.2 mm to 0.3 mm.

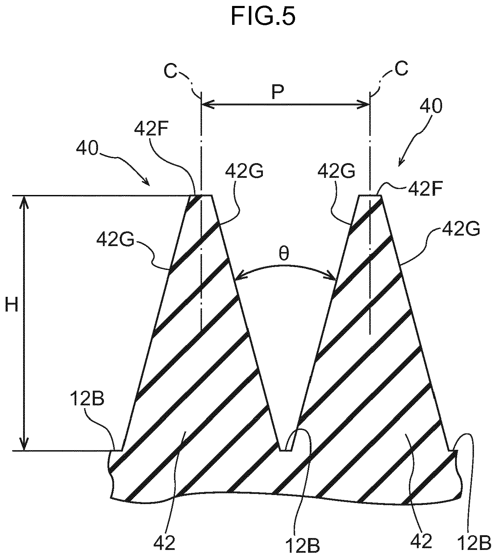

In the ridges 42 which configure the protrusion portion 40, as shown in Fig. 5, a height dimension H from the step surface 12B to a top surface 42F is set to be from 0.3 mm to 0.4 mm. In addition, a case in which the height dimension H of the ridges 42 which configure the protrusion portion 40 is set to be from 0.3 mm to 0.4 mm is described in the present embodiment, but the embodiment of the disclosure is not limited thereto. For example, the height dimension H can be in a range from 0.2 mm to 0.5 mm, and it is possible to obtain a predetermined effect as long as the height dimension H is in this range.

In addition, the top portion of the protrusion portion 40 may have a curved surface shape. In this case, the reflection of light can be dispersed at the top portion of the protrusion portion 40.

In addition, it is preferable that the top portion of the protrusion portion 40 have a pointed shape. In this case, as compared with a case in which the top portion of the protrusion portion 40 is configured to have the curved shape or by the top surface 42F in which the top is flat, a direct reflection of light is suppressed and it is possible for the dark portion 20 to look darker.

In addition, a case in which the step surface 12B between the ridges 42 of the adjacent protrusion portions 40 is configured as a plane is described as an example, but the step surface 12B may be a curved surface having an arc-shaped section in which the center portion is recessed inward. In this case, the height dimension H is defined as a dimension from a maximally recessed portion of the step surface 12B between the ridges 42 to the top surface 42F of the protrusion portion 40.

In addition, when the step surface 12B between the ridges 42 is the curved surface, the reflection of light incident between the ridges 42 is suppressed, such that it is possible for the dark portion 20 to be made darker and a contrast with portions other than the dark portion 20 can be increased.

In the protrusion portion 40, the dark portion 20 is configured to look dark by dispersing a reflection direction of light on a wall surface 42G of the ridge 42. In addition, in the space between the ridge 42 in one of the adjacent protrusion portions 40 and the ridge 42 in the other protrusion portion 40, the dark portion 20 is configured to look dark by reflecting and attenuating the light between the wall surface 42G of one ridge 42 and the wall surface 42G of the other ridge 42.

In this case, when the height dimension H of the ridge 42 which configures the protrusion portion 40 is less than 0.3 mm, an effect in which the dark portion 20 looks black by the protrusion portion 40 starts to be decreased, and when the height dimension H is less than 0.2 mm, the effect is significantly decreased. Meanwhile, when the height dimension H of the ridge 42 which configures the protrusion portion 40 exceeds 0.5 mm, moldability is deteriorated.

For this reason, it is preferable that the height dimension H of the ridge 42 which configures the protrusion portion 40 be set to from 0.2 mm to 0.5 mm, and it is more preferable that the height dimension H be set to from 0.3 mm to 0.4 mm in consideration of moldability.

The ridges 42 which configure the protrusion portion 40 are inclined in a direction away from the center lines C of the ridge 42 as the wall surfaces 42G are directed toward the step surface 12B side, and an angle θ1 formed by wall surfaces 42G facing each other in the ridges 42 which configure the adjacent protrusion portions 40 is set to be from 15° to 40°.

Here, when the angle θ1 formed by the wall surfaces 42G of the ridges 42 is less than 15°, it is easy for the ridges 42 to be deformed and collapse. Meanwhile, when the angle θ1 formed by the wall surfaces 42G of the ridges 42 exceeds 40°, a ratio in which the reflected light from the wall surfaces 42G is emitted from the dark portion 20 is increased.

For this reason, it is preferable that the angle θ1 formed by the wall surfaces 42G of the adjacent ridges 42 be set to from 15° to 40°. When the angle θ1 formed by the wall surfaces 42G is set to be from 15° to 40°, it is easy to remove the mold in a manufacturing process and moldability is improved. As a result, the collapse of the ridges 42 is reduced and durability is improved.

Next, an action and effect of the tire according to the present embodiment will be described. That is, on the tire side portion 12 or the groove bottom 28A of the circumferential groove 28 of the tread 26, the mark portions 14, 16, and 30 that form the mark are provided. The dark portion 20 which configures the mark portions 14, 16, and 30 configures the ridges 42 having the height dimension H from 0.3 mm to 0.4 mm and has the bent portion 50 formed by bending the ridges 42 when being viewed in a plan view. The bent portion 50 has a wall configured by the first straight line portion 42A of one side and a wall configured by the second straight line portion 42C of the other side bounded by the first refraction portion 42B of the ridge 42, and the wall surfaces 42G of the respective walls are directed toward four directions.

For this reason, when the light is reflected from the wall surfaces 42G configured by the respective straight line portions 42A and 42C, the reflection direction of the light can be made different and the concentration of reflected light is suppressed. As a result, since it is possible to make the dark portion 20 configured by the protrusion portions 40 having the bent portions 50 look darker than a black color of the tire 10. In addition, since the dark portion 20 looks black from various angles, anisotropy is improved and visibility is improved.

In addition, it is possible to make the dark portion 20 configured by the protrusion portions 40 having the bent portions 50 look dark. As a result, a contrast between the dark portion 20 and portions other than the dark portion 20 can be increased and visibility can be thus improved. In addition, even if light is reflected on the protrusion portions 40, the dark portion 20 shines in a stripe shape and visibility is thus improved.

In addition, the respective protrusion portions 40 are disposed so that the bent portion 50 of one of the adjacent protrusion portions 40 is positioned at a tip end side of the bent portion 50 of the other protrusion portion 40, and a pitch P of the ridges 42 which configure both of the protrusion portions 40 is configured to be from 0.15 mm to 0.40 mm. Therefore, it is possible to densely dispose the respective protrusion portions 40 as compared to a case in which the protrusion portion 40 having the bent portion 50 is separately disposed. As a result, it is possible for the dark portion 20 of the first mark portion 14 which configures the mark to be made to look darker.

In addition, the wall surfaces 42G of the ridges 42 which configure the protrusion portions 40 are inclined, and the angle θ1 formed by the wall surfaces 42G facing each other in the ridges 42 of the adjacent protrusion portions 40 is set to be 15° to 40°.

In this case, when the angle θ1 formed by the wall surfaces 42G of the ridges 42 in the adjacent protrusion portions 40 is greater than 40°, a ratio in which the reflected light on the wall surfaces 42G is returned to the outside from a space between the ridges 42 is increased, resulting in less improvement of visibility. That is, the light is reflected and a contrast difference with the bright portion 22 is decreased, resulting in less improvement of visibility.

Meanwhile, when the angle formed by the wall surfaces 42G of the ridges 42 in the adjacent protrusion portions 40 is less than 15°, it is easy for the ridges 42 to collapse. Therefore, durability of the ridges 42 can be improved by setting the angle θ1 formed by the wall surfaces 42G facing each other to 15° or more.

In addition, a plurality of bent portions 50 is continuously disposed in parallel in each protrusion portion 40 and the protrusion portion 40 is formed in a zigzag shape in which protrusions and recesses are alternately disposed. Therefore, since the protrusion portion 40 which configures the dark portion 20 can be more densely disposed, it is possible for the dark portion 20 to be made to look darker, thereby improving visibility.

In addition, only a case in which the wall surfaces 42G of the ridges 42 which configure the protrusion portion 40 are inclined is described in each embodiment, but the embodiment of the disclosure is not limited thereto and the wall surfaces 42G may not be inclined.

In addition, a case in which the bent portions 50 are continuously disposed in parallel in the protrusion portion 40, but the embodiment of the disclosure is not limited thereto and the protrusion portions 40 having a single bent portion 50 may be disposed in parallel at an interval.

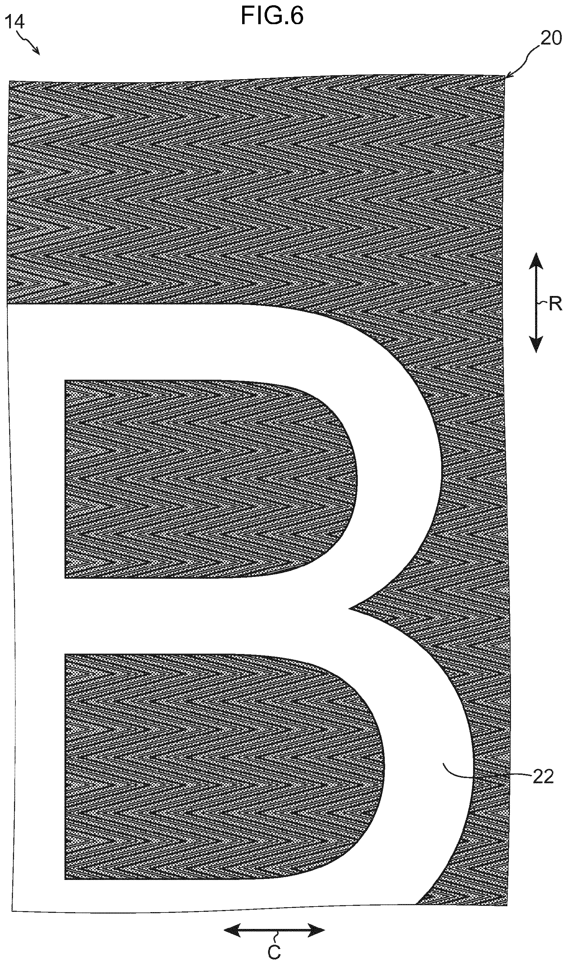

In Fig. 6, a part of the first mark portion 14 is shown. Characters which configure the bright portion 22 are configured by a smooth surface and have a gloss, such that light is reflected. The circumference of the bright portion 22 is configured by the dark portion 20, and the dark portion 20 absorbs light such that the reflection of light is suppressed. Therefore, a contrast between the bright portion 22 from which the light is reflected and the dark portion 20 in which the light is absorbed is increased, such that visibility of the characters marked on the first mark portion 14 can be improved.

In addition, even if the light is reflected on the top surface 42F of the protrusion portion 40, the first mark portion 14 shines in a stripe shape and visibility is thus improved.

In addition, a case in which the bent portions 50 are formed on the protrusion portions 40, and the ridge 42 is configured by the first straight line portion 42A extending in a straight line shape, the first refraction portion 42B continuously provided to the end portion of the first straight line portion 42A, and the second straight line portion 42C continuously provided to the first refraction portion 42B and extending in the straight line shape is described in the present embodiment, but the embodiment of the disclosure is not limited thereto.

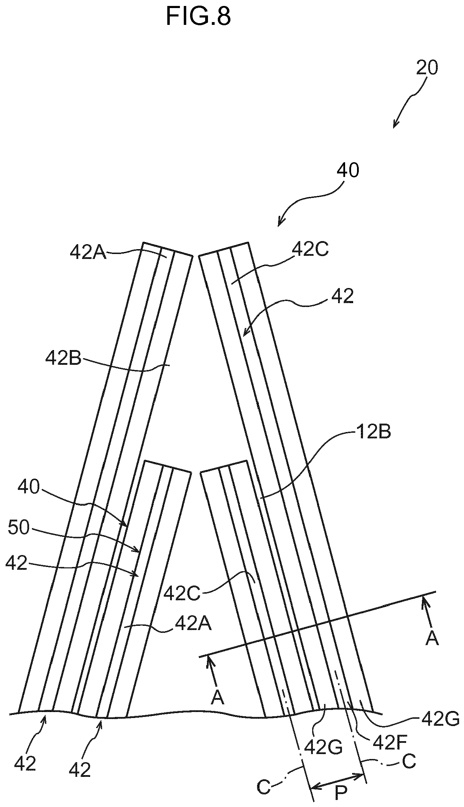

For example, as shown in Fig. 8, the protrusion portion 40 may be configured by the ridges 42 including the first straight line portion 42A and the second straight line portion 42C that extend in a direction intersecting each other, and the first straight line portion 42A and the second straight line portion 42C may be a configuration not being connected to each other. That is, the protrusion portion 40 may be a configuration not including the first refraction portion 42B and the bent portion 50. Even in this case, when the light is reflected from the respective wall surfaces 42G, the reflection direction of the light can be made different and the concentration of reflected light is suppressed. Thereby, it is possible for the dark portion configured by the protrusion portion 40 which does not include the bent portion 50 to be made to look dark.

Even in this case, an angle θ2 (see Fig. 4) at which the first straight line portion 42A and the second straight line portion 42C intersect each other is set to be from 5° to 170°. Thereby, in the bent portion, the concentration of reflected light between the ridges is suppressed and anisotropy is increased, thereby improving visibility. In addition, it is preferable that the angle θ2 be set to from 30° to 90°. As long as the angle θ2 is in this range, the concentration of the reflected light is effectively suppressed and the dark portion looks darker. In addition, since anisotropy is improved, visibility is increased.

### <Test Examples>

In order to demonstrate an effect of the disclosure, the following tests 1 to 3 were performed.

### (Test Condition)

As test tires, tires having a size of 205/55R16 and a cross section height SH of 114 mm were used.

In each of the test tires, the first mark portion 14 according to the fourth embodiment was provided. In the dark portion 20 which configures the first mark portion 14, the height dimension H of the protrusion portion 40, the pitch P, and the angle θ1 formed by the wall surface 42G of the adjacent protrusion portions 40 were set to 0.35 mm, 0.2 mm, and 25°, respectively, as reference values. In each test, an evaluation test was conducted using test tires having values shown in Tables 1 to 3 as the height dimension H, the pitch P, and the angle θ1 formed by the wall surface 42G of the adjacent protrusion portions 40. In addition, an evaluation test was conducted using test tires having values shown in Table 4 as the height dimension H, the pitch P, and the angle θ1 formed by the wall surface 42G of the adjacent protrusion portions 40, and an angle θ2 at which the first straight line portion 42A and the second straight line portion 42C intersect each other in the bent portion 50.

### (Test Method)

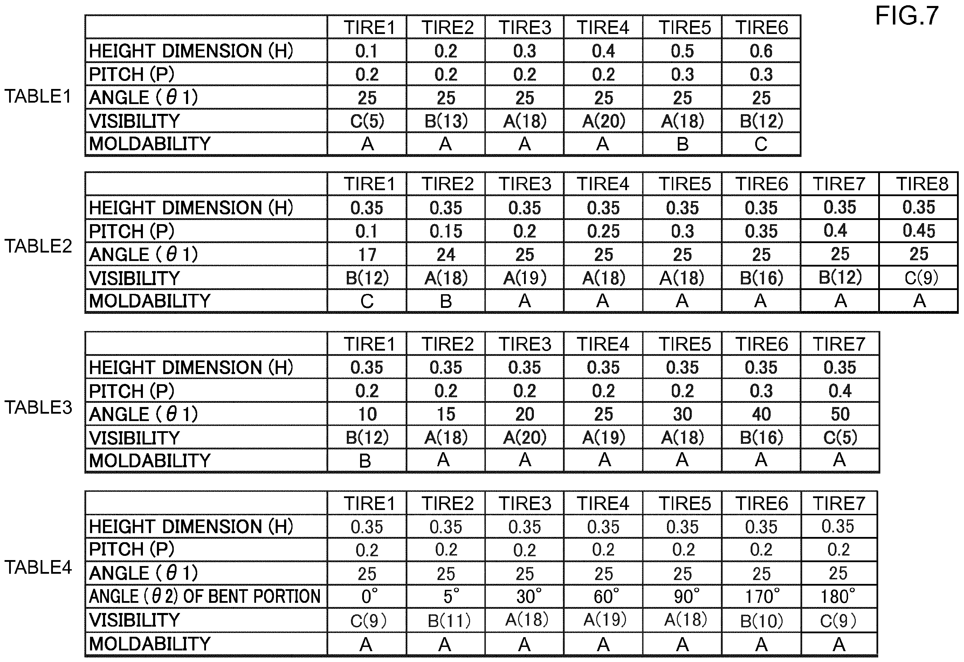

In the test, visibility when the dark portion 20 of the first mark portion 14 was viewed from each direction was evaluated. First, each test tire was assembled to an application rim. Then, twenty viewers observed each test tire, and a questionnaire survey as to whether the dark portion 20 looks blacker than a usual tire was performed on the twenty viewers. Survey results are shown as "visibility" in Tables 1 to 4 (see Fig. 7).

In addition, in each Table, a case in which the number of viewers who answered that the dark portion 20 looks black and clear is 18 or more, a case in which the number of viewers is 10 to 17, and a case in which the number of viewers is 9 or less were evaluated as A, B, and C, respectively. In addition, in each Table, the number of viewers who answered that the dark portion 20 looks black and clear is also described.

In addition, in this test, moldability of the protrusion portion 40 was evaluated. First, each of the test tires is manufactured, generation of bare in the protrusion portion 40 of each test tire was evaluated with naked eyes, and moldability was evaluated using a generation rate of bare in the protrusion portion 40 as an index. Evaluation results are shown in each of Tables as "moldability". In each of Tables, the moldability of the pattern portion is represented by A in a case in which the generation rate of the bare is less than 0.1%, is represented by B in a case in which the generation rate of the bare is from 0.1 to less than 0.3%, and is represented by C in a case in which the generation rate of the bare is 0.3% or more.

### (Test 1)

In Test 1, as shown in Table 1 of Fig. 7, Tires 1 to 6 in which the height dimension H of the protrusion portion 40 is changed were prepared and tested. Except for the height dimension H, the abovementioned reference values were used and the pitch P was adjusted according to the height dimension H.

As shown in Table 1, it was confirmed that the visibility was improved in consideration of moldability when the height dimension H was in a range from 0.2 mm to 0.5 mm and the visibility was further improved when the height dimension H was in a range from 0.3 mm to 0.4 mm. In addition, it was confirmed that the moldability was deteriorated when the height dimension H exceeded 0.5 mm.

### (Test 2)

In Test 2, as shown in Table 2 of Fig. 7, Tires 1 to 8 in which the pitch P of the protrusion portion 40 is changed were prepared and tested. In addition, except for the pitch P, the abovementioned reference values were used and the angle θ1 was adjusted according to the pitch P.

As shown in Table 2, it was confirmed that the visibility was improved in consideration of moldability when the pitch P was in a range from 0.15 mm to 0.40 mm and the visibility was further improved when the pitch P was in a range from 0.2 mm to 0.3 mm.

### (Test 3)

In Test 3, as shown in Table 3 of Fig. 7, Tires 1 to 7 in which the angle θ1 formed by the wall surfaces 42G of the adjacent protrusion portions 40 is changed were prepared and tested. In addition, except for the angle θ1, the abovementioned reference values were used and the pitch P was adjusted according to the angle θ1.

As shown in Table 3, it could be confirmed that the visibility was improved in consideration of moldability when the angle θ1 was in a range from 15° to 40°.

### (Test 4)

In Test 4, as shown in Table 4 of Fig. 7, Tires 1 to 7 in which the angle θ2 at which the first straight line portion 42A and the second straight line portion 42C in the bent portion 50 intersect each other is changed were prepared and tested. In addition, except for the angle θ2, the abovementioned reference values were used.

As shown in Table 3, it could be confirmed that the visibility was improved in consideration of moldability when the angle θ2 was in a range from 5° to 170°. In addition, it was confirmed that the visibility was further improved when the angle θ2 was in a range from 30° to 90°.

## Claims

1. A tire (10) comprising a plurality of protrusion portions (40) protrudedly disposed on an outer surface of the tire (10) and configured by ridges (42) having a plurality of straight line portions (42A, 42C) extending in a direction intersecting each other,
wherein a height dimension (H) of the protrusion portion (40) is set to be from 0.2 mm to 0.5 mm, and
a pitch (P) of the ridges (42) which configure the protrusion portions (40) adjacent to each other when being viewed in a plan view is set to be from 0.15 mm to 0.40 mm, **characterized in that**
wall surfaces (42G) of the ridges (42) which configure the protrusion portion (40) are inclined, and an angle (θ1) formed by wall surfaces (42G) facing each other in the ridges (42) of the adjacent protrusion portions (40) is set to be from 15° to 40°.

2. The tire (10) according to claim 1,
wherein the ridges (42) have bent portions (50) at which end portions of the plurality of straight line portions (42A, 42C) are connected to each other, and
the bent portion (50) in one of the protrusion portions (40) adjacent to each other when being viewed in the plan view is positioned at a tip end side of the bent portion (50) in the other protrusion portion (40).

3. The tire (10) according to claim 2, wherein the bent portions (50) are continuously disposed in parallel, and the protrusion portion (40) has a zigzag shape.

4. The tire (10) according to any one of claims 1 to 3, wherein an angle (θ2) between the plurality of straight line portions (42A, 42C) is set to be from 5° to 170°.

## Patentansprüche

1. Reifen (10), der mehrere Vorsprungsabschnitte (40) umfasst, die vorspringend auf einer Außenfläche des Reifens (1) geformt und durch Stege (42) konfiguriert sind, die mehrere geradlinige Abschnitte (42A, 42C) aufweisen, die sich in einander schneidende Richtungen erstrecken,
wobei eine Höhenabmessung (H) des Vorsprungsabschnitts (40) so festgesetzt ist, dass sie von 0,2 mm bis 0,5 mm beträgt, und
ein Abstand (P) der Stege (42), die die Vorsprungsabschnitte (40) konfigurieren, die zueinander benachbart sind, wenn sie in der Draufsicht betrachtet werden, so festgesetzt ist, dass er von 0,15 mm bis 0,40 mm beträgt, **dadurch gekennzeichnet, dass**
Wandflächen (42G) der Stege (42), die den Vorsprungsabschnitt (40) konfigurieren, geneigt sind, und ein Winkel (θ1), der durch Wandflächen (42G) gebildet wird, die einander in den Stegen (42) der benachbarten Vorsprungsabschnitte (40) gegenüberliegen, so festgesetzt ist, dass er von 15° bis 40° beträgt.

2. Reifen (10) nach Anspruch 1,
wobei die Stege (42) gebogene Abschnitte (50) aufweisen, an denen Endabschnitte der mehreren geradlinigen Abschnitte (42A, 42C) miteinander verbunden sind, und
der gebogene Abschnitt (50) in dem einen der Vorsprungsabschnitte (40), die zueinander benachbart sind, wenn sie in der Draufsicht betrachtet werden, an einer Spitzenendseite des gebogenen Abschnitts (50) in dem anderen Vorsprungsabschnitt (40) angeordnet ist.

3. Reifen (10) nach Anspruch 2, wobei die gebogenen Abschnitte (50) durchgehend parallel angeordnet sind und der Vorsprungsabschnitt (40) eine Zickzackform aufweist.

4. Reifen (10) nach einem der Ansprüche 1 bis 3, wobei ein Winkel (θ2) zwischen den mehreren geradlinigen Abschnitten (42A, 42C) so festgesetzt ist, dass er von 5° bis 170° beträgt.

## Revendications

1. Bandage pneumatique (10), comprenant plusieurs parties en saillie (40), disposées en saillie sur une surface externe du bandage pneumatique (10) et configurées par des nervures (42) comportant plusieurs parties de ligne droite (42A, 42C) s'étendant dans des directions qui se croisent ;
dans lequel une dimension de hauteur (H) de la partie en saillie (40) est ajustée pour être comprise entre 0,2 mm et 0,5 mm ; et
un pas (P) des nervures (42) configurant les parties en saillie (40) adjacentes les unes aux autres, vues dans une vue en plan, est ajusté de sorte à être compris entre 0,15 mm et 0,40 mm ; **caractérisé en ce que** :
des surfaces de paroi (42G) des nervures (42) configurant la partie en saillie (40) sont inclinées, un angle (θ1) formé par les surfaces de paroi (42G) se faisant mutuellement face dans les nervures (42) des parties en saillie adjacentes (40) étant ajusté de sorte à être compris entre 15° et 40°.

2. Bandage pneumatique (10) selon la revendication 1,
dans lequel les nervures (42) comportent des parties fléchies (50) au niveau desquelles des parties d'extrémité des plusieurs parties de ligne droite (42A, 42C) sont connectées les unes aux autres ; et
la partie fléchie (50) dans l'une des parties en saillie (40) adjacentes les unes aux autres, vues dans la vue en plan, est positionnée au niveau d'un côté d'extrémité de pointe de la partie fléchie (50) dans l'autre partie en saillie (40).

3. Bandage pneumatique (10) selon la revendication 2, dans lequel les parties fléchies (50) sont disposées en continu de manière parallèle, la partie en saillie (40) ayant une forme en zigzag.

4. Bandage pneumatique (10) selon l'une quelconque des revendications 1 à 3, dans lequel un angle (θ2) entre les plusieurs parties de ligne droite (42A, 42C) est ajusté de sorte à être compris entre 5° et 170°.
